(19) Europäisches Patentamt
European Patent Office
Office européen des brevets

(11) **EP 3 483 582 A1**

(12) **EUROPÄISCHE PATENTANMELDUNG**

(43) Veröffentlichungstag:
**15.05.2019 Patentblatt 2019/20**

(21) Anmeldenummer: **18202770.6**

(22) Anmeldetag: **26.10.2018**

(51) Int Cl.:
*G01M 17/02* (2006.01)        *B66F 9/24* (2006.01)
*B66F 9/075* (2006.01)       *B60C 11/24* (2006.01)
*G01B 21/12* (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **06.11.2017 DE 102017125853**

(71) Anmelder: **Linde Material Handling GmbH**
**63743 Aschaffenburg (DE)**

(72) Erfinder: **HANKE, Mark**
**63739 Aschaffenburg (DE)**

(74) Vertreter: **Patentship**
**Patentanwaltsgesellschaft mbH**
**Elsenheimerstraße 65**
**80687 München (DE)**

(54) **VERFAHREN UND VORRICHTUNG ZUR ERMITTLUNG VON REIFENVERSCHLEISS BEI EINEM FLURFÖRDERZEUG**

(57) Die Erfindung betrifft ein Verfahren zur Ermittlung von Reifenverschleiß bei Radreifen eines Flurförderzeugs mit mindestens einer ein linkes (RL) und ein rechtes Rad (RR) aufweisenden Radachse (1), wobei das linke Rad (RL) einen Abstand ($I_1$) und das rechte Rad (RR) einen Abstand ($I_2$) von einem Achsenmittelpunkt aufweist, sowie eine Vorrichtung zur Durchführung des Verfahrens. Es wird vorgeschlagen, dass für das linke Rad (RL) und für das rechte Rad (RR) der Radachse (1) jeweils ein Drehzahlsensor zur Erfassung von Winkelgeschwindigkeiten ($\omega_L$, $\omega_R$) der Räder (RL, RR) und zusätzlich ein Längsbeschleunigungssensor zur Erfassung einer Längsbeschleunigung (as) des Flurförderzeugs sowie ein Gierratensensor zur Erfassung einer Gierrate ($\omega_S$) und einer Winkelbeschleunigung ($\omega_S$) des Flurförderzeugs angebracht sind, und dass diese Sensoren mit einer Datenverarbeitungseinrichtung zur Berechnung von dynamischen Reifenhalbmessern $r_L$ und $r_R$ für das linke (RL) und rechte Rad (RR) aus den erfassten Daten und zur Berechnung des Reifenverschleißes in Wirkverbindung stehen.

Fig. 1

**Beschreibung**

Die Erfindung betrifft ein Verfahren zur Ermittlung von Reifenverschleiß bei Radreifen eines Flurförderzeugs mit mindestens einer ein linkes und ein rechtes Rad aufweisenden Radachse, wobei das linke Rad einen Abstand $l_1$, und das rechte Rad einen Abstand $l_2$ von einem Achsenmittelpunkt aufweist, sowie eine Vorrichtung zur Durchführung des Verfahrens.

Als Radreifen für Flurförderzeuge, insbesondere Gabelstapler, werden überwiegend sogenannte Superelastik-Reifen eingesetzt. Im Gegensatz zu Autoreifen können diese Reifen recht weit abgefahren werden. Es handelt sich dabei üblicherweise nicht um luftbefüllte Reifen, sondern um Vollgummireifen. Sie bestehen meistens aus mehreren Schichten unterschiedlicher Materialien, wobei die Reifen fast bis auf eine Tragschicht abgefahren werden können. Zum Beispiel können kleinere Elektro-Gabelstapler mit einer Reifengröße von 180/70-8 um einen Reifenradius von 38 mm abgefahren werden, bevor sie getauscht werden müssen. Bei großen Gabelstaplern kommen z.B. Reifen der Größe 8.25-15 oder 365/65-15 zum Einsatz, die um einen Radius von 75 mm oder 71 mm abgefahren werden können.

Viele Flurförderzeuge werden im sogenannten "Full Service"- Geschäft betrieben, bei dem der Flurförderzeughändler oder der Flurförderzeughersteller für die gesamte Wartung der Flurförderzeuge und auch für eine Überwachung des Reifenzustands und einem rechtzeitigen Tausch der Reifen zuständig ist. Da der Reifenverschleiß stark vom individuellen Fahrverhalten von Bedienpersonen abhängig ist, kann über einfache Kenngrößen, z.B. Betriebsstunden, kein genauer Tauschzeit für die Reifen bestimmt werden. Bei größeren Flurförderzeugflotten in Produktionsbetrieben, z.B. in der Autoindustrie, werden häufig mehrere Hundert Flurförderzeuge an einem Standort betrieben. Eine händische Ermittlung des Verschleißzustandes der Reifen der Flurförderzeuge der Flurförderzeugflotte ist zeitaufwändig und damit kostenintensiv. Der vorliegenden Erfindung liegt die Aufgabe zugrunde, ein Verfahren der genannten Art so auszugestalten, dass der Reifenverschleiß automatisch ermittelt werden kann.

Diese Aufgabe wird erfindungsgemäß dadurch gelöst, dass für das linke Rad und für das rechte Rad der Radachse jeweils mittels eines Drehzahlsensors Winkelgeschwindigkeiten ($\omega_L$, $\omega_R$) der Räder, mittels mindestens eines Längsbeschleunigungssensors eine Längsbeschleunigung ($a_S$) des Flurförderzeugs und mittels mindestens eines Gierratensensors eine Gierrate ($\omega_S$) sowie eine Winkelbeschleunigung ($\dot{\omega}_S$) des Flurförderzeugs als Fahrdaten erfasst werden und die erfassten Fahrdaten in einer Datenverarbeitungseinrichtung ausgewertet werden, wobei durch Integration der Längsbeschleunigung ($a_S$) des Flurförderzeugs eine Längsgeschwindigkeit ($v_S$) des Flurförderzeugs berechnet wird, und dass unter Zugrundelegung einer Konstanten K für einen Zusammenhang zwischen Reifenschlupf und Fahrbeschleunigung dynamische Reifenhalbmesser $r_L$ und $r_R$ für das linke und rechte Rad mittels der Formeln

$$r_L = \frac{v_S - \omega_S \cdot l_1}{\omega_L \cdot \left(1 - \frac{a_S - \dot{\omega}_S \cdot l_1}{K}\right)} \quad \text{und} \quad r_R = \frac{v_S + \omega_S \cdot l_2}{\omega_R \cdot \left(1 - \frac{a_S + \dot{\omega}_S \cdot l_2}{K}\right)}$$

berechnet werden und ein Vergleich mit in der Datenverarbeitungeinrichtung hinterlegten Werten für eine Verschleißgrenze der Radreifen durchgeführt wird, und dass die Datenverarbeitungseinrichtung eine Meldung über den Reifenverschleiß ausgibt.

Dabei liegt der Erfindung die Erkenntnis zu Grunde, dass der Reifenverschleiß aus den Fahrdaten des Flurförderzeugs ermittelt werden kann. Im Fahrbetrieb können die Daten in die Datenverarbeitungseinrichtung eingelesen werden, so dass die Werte für die dynamischen Reifenhalbmesser permanent berechnet werden. Auf diese Weise ist eine kontinuierliche Überwachung des Reifenzustandes der Flurförderzeuge auch bei größeren Flotten von Flurförderzeugen während des normalen Betriebs möglich.

Als Gierratensensor kann ein Sensor verwendet werden, der nur die Gierrate, also die Winkelgeschwindigkeit der Drehung des Flurförderzeugs um eine vertikale Achse, direkt misst, oder ein Sensor, der nur die Winkelbeschleunigung der Drehung des Flurförderzeugs um die vertikale Achse direkt misst, oder ein Sensor, der beide Werte misst. Bei Sensoren, die nur die Gierrate oder nur die Winkelbeschleunigung direkt messen, ergibt sich der jeweils andere Wert durch interne Umrechnung, so dass auch in diesen Fällen schließlich beide Werte erfasst werden und für eine weitere Auswertung in der Datenverarbeitungseinrichtung zur Verfügung stehen.

Die berechneten dynamischen Reifenhalbmesser können unter Umständen stark schwanken. Dafür sind unter anderem folgende Einflüsse verantwortlich:
Die Fahrdaten bezüglich der Winkelgeschwindigkeiten $\omega_L$ und $\omega_R$ können in der Praxis durch Reibschlupf zu große Werte annehmen. Dies kann zum Beispiel durch ein durchdrehendes Rad verursacht werden.

Außerdem können der Längsbeschleunigungssensor und der Gierratensensor auch Beschleunigungen messen, die durch Störungen hervorgerufen werden. Diese können zum Beispiel bei einer Rampenfahrt, bei Fahrbahnunebenheiten, bei Stößen oder bei Bewegungen des Hubgerüstes, beispielsweise beim Ein- und Auslagern von Lasten, auftreten.

Gemäß einer besonders bevorzugten Ausgestaltung der Erfindung ist daher vorgesehen, dass die Werte bezüglich der dynamischen Reifenhalbmesser aufbereitet werden. Dabei wird davon ausgegangen, dass sich der Reifenverschleiß nicht schlagartig ändert, sodass die Daten umfangreich gefiltert werden können. Wenn zum Beispiel pro Tag nur ein verlässlicher dynamischer Reifenhalbmesser ermittelt würde, wäre dies für eine zuverlässige Überwachung des Reifenverschleißes völlig ausreichend.

Daher werden die erfassten Fahrdaten bevorzugt einer Fehleranalyse unterzogen, wobei fehlerbehaftete Werte für die dynamischen Reifenhalbmesser verworfen werden. Beispielsweise können zu große Werte für die Winkelgeschwindigkeiten $\omega_L$ und $\omega_R$ durch fahrzeuginterne Signale erkannt werden. Dies ist zum Beispiel beim Auftreten von zu hohen Drehzahlgradienten bei gleichbleibender Stromzufuhr von elektrischen Radmotoren eines elektrisch angetriebenen Flurförderzeugs der Fall. Die zu diesen Zeitpunkten berechneten dynamischen Reifenhalbmesser können durch die Datenverarbeitungseinrichtung verworfen werden.

Auch wenn bei Flurförderzeugen mit einem Hubgerüst gearbeitet wird, sind Störsignale zu erwarten. Die zu diesen Zeitpunkten berechneten dynamischen Reifenhalbmesser werden ebenfalls verworfen.

Ebenfalls können Fahrten mit einem sehr engen Kurvenradius verworfen werden.

Zweckmäßigerweise werden die Werte für die dynamischen Reifenhalbmesser in Datensätze aufgeteilt. Als Aufteilungskriterium können bestimmte Betriebszustände des Flurförderzeugs dienen (z.B. Starten und Abstellen des Flurförderzeugs). Es können auch Zeiten zwischen gelöschten Datensätzen oder auch feste Zeitdauern verwendet werden. Jeder Datensatz wird vorteilhafterweise hinsichtlich einer Standardabweichung analysiert. Wenn die Standardabweichung einen Schwellwert überschreitet, wird der Datensatz verworfen. Der finale Wert für die dynamischen Reifenhalbmesser wird aus einem Mittelwert der nicht verworfenen Datensätze einer festgelegten Zeitdauer (zum Beispiel acht Betriebsstunden, ein Tag, eine Woche) berechnet.

Eine geringe Standardabweichung der erfassten Fahrdaten kann als Gütekriterium bei der Ermittlung des Reifenverschleißes verwendet werden.

Vorzugsweise gibt die Datenverarbeitungseinrichtung bei Erreichen der Verschleißgrenze des Reifens eine Warnmeldung aus.

In einer besonders bevorzugten Ausgestaltung der Erfindung wird die Meldung der Datenverarbeitungseinrichtung über den Reifenverschleiß drahtlos an eine Servicestelle übermittelt. Auf diese Weise ist eine besonders effektive Wartung des Flurförderzeugs möglich, wobei die Reifen, die die Verschleißgrenze erreicht haben, zum wirtschaftlichsten Zeitpunkt gewechselt werden können.

Bei jedem Reifenwechsel können vorteilhafterweise von einem Servicemonteur über eine am Flurförderzeug angebrachte Eingabeeinrichtung Informationen über den jeweiligen Reifentyp eingegeben werden, sodass die Datenverarbeitungseinrichtung die entsprechende Verschleißgrenze dieses speziellen Reifens berücksichtigen kann. Da oftmals für die Reifentypen nicht die dynamischen Reifenhalbmesser, sondern die statischen Reifenhalbmesser angegeben sind, sind in der Datenverarbeitungseinrichtung vorzugsweise Umrechnungsfaktoren hinterlegt. Somit kann die Datenverarbeitungseinrichtung die Verschleißgrenze des Reifens mit den aktuell berechneten dynamischen Reifenhalbmessern vergleichen.

Die Meldung über den Reifenverschleiß kann auf verschiedene Weise erfolgen. Beispielsweise kann auf einem Fahrzeugdisplay des Flurförderzeugs dem Fahrer eine Meldung angezeigt werden. Es kann aber auch einem Servicemonteur in einer Servicezentrale durch eine drahtlose Übermittlung eine Meldung gesendet werden. Die Anzeige kann zum Beispiel folgendermaßen aussehen: "xx Millimeter bis zur Verschleißgrenze" oder "Reifenzustand in %" oder "XX Betriebsstunden bis zum Reifentausch". Es kann auch eine Ampeldarstellung mit unterschiedlichen Farben, beispielsweise rot, gelb, grün, erfolgen, die den Reifenzustand als schlecht, mittel und gut wiedergibt.

Eine Weiterbildung des Erfindungsgedankens sieht vor, dass die Datenverarbeitungseinrichtung bei Erreichen der Verschleißgrenze der Reifen in die Steuerung des Flurförderzeugs eingreift, um Fahrgeschwindigkeit und Beschleunigung des Flurförderzeugs zu verringern. Auf diese Weise wird ein automatisches Assistenzsystem geboten, das insgesamt die Sicherheit des Flurförderzeugs erhöht.

Die Daten der Sensoren können auch für andere Funktionen verwendet werden, wie zum Beispiel für eine Fahrgeschwindigkeitsanzeige oder eine Weiterentwicklung von automatischen Fahrstabilisierungssystemen und/oder Fahrerassistenzsysteme. Der Längsbeschleunigungssensor erkennt zum Beispiel auch eine Rampensteigung, sodass die Geschwindigkeit des Flurförderzeugs auf einer Rampe automatisch begrenzt werden könnte.

Die Erfindung betrifft ferner eine Vorrichtung zur Ermittlung von Reifenverschleiß bei Radreifen eines Flurförderzeugs mit mindestens einer ein linkes und ein rechtes Rad aufweisenden Radachse, wobei das linke Rad einen Abstand $l_1$ und das rechte Rad einen Abstand $l_2$ von einem Achsenmittelpunkt aufweist.

Bei einer solchen Vorrichtung wird die gestellte Aufgabe dadurch gelöst, dass am linken Rad und am rechten Rad der Radachse jeweils ein Drehzahlsensor zur Erfassung von Winkelgeschwindigkeiten der Räder und zusätzlich ein Längsbeschleunigungssensor zur Erfassung einer Längsbeschleunigung des Flurförderzeugs sowie ein Gierratensensor zur Erfassung einer Gierrate und einer Winkelbeschleunigung des Flurförderzeugs angebracht sind, und dass diese Sensoren mit einer Datenverarbeitungseinrichtung zur Berechnung von dynamischen Reifenhalbmessern $r_L$ und $r_R$ für das linke und rechte Rad aus den erfassten Daten und zur Berechnung des Reifenverschleißes in Wirkverbindung stehen.

Die Erfindung eignet sich für alle Arten von Flurförderzeugen, die mindestens eine Radachse mit linkem und rechtem Rad aufweisen. Besonders vorteilhaft kann die Erfindung bei Gabelstaplern, insbesondere Gegengewichtsgabelstaplern, eingesetzt werden. Üblicherweise besitzen als Antriebsachsen ausgebildete Radachsen von Flurförderzeugen bereits Drehzahlsensoren an den Radmotoren sowohl des rechten als auch des linken Rades. Bei Lenkachsen sind bisher Drehzahlsensoren nicht üblich. Diese könnten allerdings mit Drehzahlsensoren nachgerüstet werden, sodass auch bei nicht angetriebenen Lenkachsen die erfindungsgemäße Verschleißermittlung angewandt werden könnte.

Weitere Vorteile und Einzelheiten der Erfindung werden anhand des in der schematischen Figur dargestellten Ausführungsbeispiels näher erläutert. Hierbei zeigt

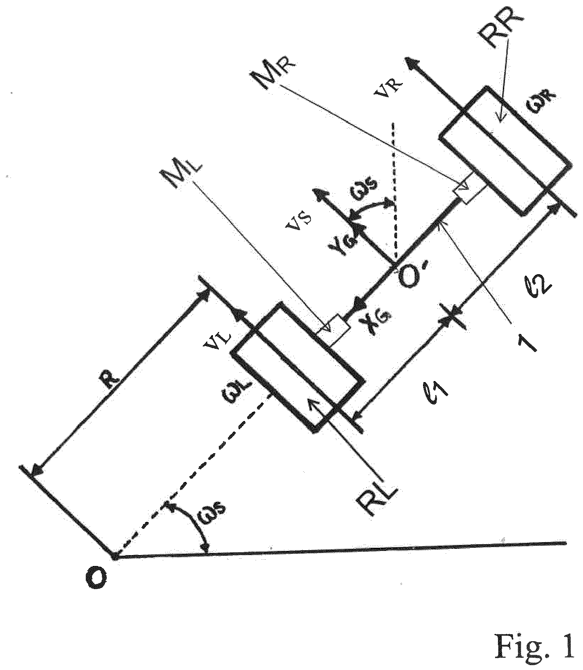

Figur 1    eine Draufsicht auf eine Radachse eines Flurförderzeugs.

In Figur 1 ist eine Radachse 1 eines Flurförderzeugs, z.B. eines Gabelstaplers, dargestellt. Die Radachse 1 ist im dargestellten Ausführungsbeisiel als Antriebsachse, beispielsweise elektrisch angetriebene Antriebsachse, ausgebildet.

Die Radachse 1 weist ein linkes Rad RL mit einem eigenen elektrischen Antriebsmotor ML und ein rechtes Rad RR mit einem eigenen elektrischen Antriebsmotor MR auf. In den beiden Antriebsmotoren ML und MR sind bereits Drehzahlsensoren integriert. Somit können die Winkelgeschwindigkeiten $\omega_L$ und $\omega_R$ der Räder RL, RR aus der Fahrzeugsteuerung bzw. Motorsteuerung ausgelesen werden, die die Antriebsmotoren ML, MR ansteuert.

Mit der Bezugsziffer O ist in der Figur 1 ein Momentanpol bezeichnet, um den sich die Radachse 1 bei Kurvenfahrt dreht. Dabei ist mit R der Abstand des Rades RL vom Momentanpol O bezeichnet. Am Ort O' ist ein Sensorcluster möglichst steif am Fahrzeugchassis oder auf der Achse des Flurförderzeugs montiert. Das Sensorcluster besteht aus mindestens einem Längsbeschleunigungssensor und einem Gierratenensor.

Der Reifenverschleiß der Räder RL, RR kann über die bereits vorhandenen internen Drehzahlsensoren der Antriebsmotoren $M_L$ und $M_R$ und das zusätzliche Sensorcluster ermittelt werden.

Aus der Fahrzeugsteuerung bzw. Motorsteuerung werden die beiden Winkelgeschwindigkeiten $\omega_L$ und $\omega_R$ der Räder RL und RR ausgelesen. Das Sensorcluster liefert die Längsbeschleunigung as und die Gierrate $\omega_S$, sowie die Winkelbeschleunigung $\dot{\omega}_S$.

Diese Daten werden als Fahrdaten erfasst und in einer Datenverarbeitungseinrichtung ausgewertet. Durch Integration der Längsbeschleunigung as des Flurförderzeugs wird die Längsgeschwindigkeit $v_S$ des Flurförderzeugs berechnet. Unter Zugrundelegung einer Konstanten K für einen Zusammenhang zwischen Reifenschlupf und Fahrbeschleunigung werden die dynamischen Reifenhalbmesser $r_L$ und $r_R$ für das linke und rechte Rad mittels der Formeln

$$r_L = \frac{v_S - \omega_S \cdot l_1}{\omega_L \cdot \left(1 - \frac{a_S - \dot{\omega}_S \cdot l_1}{K}\right)} \quad \text{und} \quad r_R = \frac{v_S + \omega_S \cdot l_2}{\omega_R \cdot \left(1 - \frac{a_S + \dot{\omega}_S \cdot l_2}{K}\right)}$$

berechnet.

Diese Werte werden mit den in der Datenverarbeitungeinrichtung hinterlegten Werten für eine Verschleißgrenze der Räder RL, RR verglichen. Schließlich gibt die Datenverarbeitungseinrichtung eine Meldung über den Reifenverschleiß der Räder RL, RR aus.

**Patentansprüche**

**1.** Verfahren zur Ermittlung von Reifenverschleiß bei Radreifen eines Flurförderzeugs mit mindestens einer ein linkes und ein rechtes Rad aufweisenden Radachse, wobei das linke Rad einen Abstand ($l_1$) und das rechte Rad einen Abstand ($l_2$) von einem Achsenmittelpunkt aufweist, **dadurch gekennzeichnet, dass** für das linke Rad (RL) und für das rechte Rad (RR) der Radachse (1) jeweils mittels eines Drehzahlsensors Winkelgeschwindigkeiten ($\omega_L$, $\omega_R$) der Räder (RL, RR), mittels mindestens eines Längsbeschleunigungssensors eine Längsbeschleunigung ($a_S$) des Flurförderzeugs und mittels mindestens eines Gierratensensors eine Gierrate ($\omega_S$) sowie eine Winkelbeschleunigung ($\dot{\omega}_S$) des Flurförderzeugs als Fahrdaten erfasst werden und die erfassten Fahrdaten in einer Datenverarbeitungseinrichtung ausgewertet werden, wobei durch Integration der Längsbeschleunigung ($a_S$) des Flurförderzeugs eine Längsgeschwindigkeit ($v_S$) des Flurförderzeugs berechnet wird, und dass unter Zugrundelegung einer Konstanten K für einen Zusammenhang zwischen Reifenschlupf und Fahrbeschleunigung dynamische Reifenhalbmesser $r_L$

und $r_R$ für das linke (RL) und rechte Rad (RR) mittels der Formeln

$$r_L = \frac{v_S - \omega_S \cdot l_1}{\omega_L \cdot \left(1 - \frac{a_S - \dot{\omega}_S \cdot l_1}{K}\right)} \quad \text{und} \quad r_R = \frac{v_S + \omega_S \cdot l_2}{\omega_R \cdot \left(1 - \frac{a_S + \dot{\omega}_S \cdot l_2}{K}\right)}$$

berechnet werden und ein Vergleich mit in der Datenverarbeitungeinrichtung hinterlegten Werten für eine Verschleißgrenze der Radreifen durchgeführt wird, und dass die Datenverarbeitungseinrichtung eine Meldung über den Reifenverschleiß ausgibt.

2. Verfahren nach Anspruch 1, **dadurch gekennzeichnet, dass** die erfassten Fahrdaten einer Fehleranalyse unterzogen werden und fehlerbehaftete Werte für die dynamischen Reifenhalbmesser $r_L$ und $r_R$ verworfen werden.

3. Verfahren nach Anspruch 1 oder 2, **dadurch gekennzeichnet, dass** eine geringe Standardabweichung der erfassten Fahrdaten als Gütekriterium bei der Ermittlung des Reifenverschleißes verwendet wird.

4. Verfahren nach einem der Ansprüche 1 bis 3, **dadurch gekennzeichnet, dass** die Datenverarbeitungseinrichtung bei Erreichen der Verschleißgrenze eine Warnmeldung ausgibt.

5. Verfahren nach einem der Ansprüche 1 bis 4, **dadurch gekennzeichnet, dass** die Meldung der Datenverarbeitungseinrichtung über den Reifenverschleiß drahtlos an eine Servicestelle übermittelt wird.

6. Verfahren nach einem der Ansprüche 1 bis 5, **dadurch gekennzeichnet, dass** die Datenverarbeitungseinrichtung bei Erreichen der Verschleißgrenze der Radreifen in die Steuerung des Flurförderzeugs eingreift, um Fahrgeschwindigkeit und Beschleunigung des Flurförderzeugs zu verringern.

7. Vorrichtung zur Ermittlung von Reifenverschleiß bei Radreifen eines Flurförderzeugs mit mindestens einer ein linkes und ein rechtes Rad aufweisenden Radachse, wobei das linke Rad einen Abstand ($l_1$) und das rechte Rad einen Abstand ($l_2$) von einem Achsenmittelpunkt aufweist, **dadurch gekennzeichnet, dass** für das linke Rad (RL) und für das rechte Rad (RR) der Radachse (1) jeweils ein Drehzahlsensor zur Erfassung von Winkelgeschwindigkeiten ($\omega_L$, $\omega_R$) der Räder (RL, RR) vorgesehen sind und zusätzlich ein Längsbeschleunigungssensor zur Erfassung einer Längsbeschleunigung ($a_S$) des Flurförderzeugs sowie ein Gierratensensor zur Erfassung einer Gierrate ($\omega_S$) und einer Winkelbeschleunigung ($\dot{\omega}_S$) des Flurförderzeugs angebracht sind, und dass diese Sensoren mit einer Datenverarbeitungseinrichtung zur Berechnung von dynamischen Reifenhalbmessern $r_L$ und $r_R$ für das linke (RL) und rechte Rad (RR) aus den erfassten Daten und zur Berechnung des Reifenverschleißes in Wirkverbindung stehen.

Fig. 1

Europäisches Patentamt
European Patent Office
Office européen des brevets

## EUROPÄISCHER RECHERCHENBERICHT

Nummer der Anmeldung

EP 18 20 2770

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | DE 10 2011 053961 A1 (STILL GMBH [DE]) 28. März 2013 (2013-03-28) * Absatz [0002]; Abbildungen * * Absatz [0009] * ----- | 1-7 | INV. G01M17/02 B66F9/24 B66F9/075 B60C11/24 G01B21/12 |
| A | DE 10 2013 014198 A1 (WABCO GMBH [DE]) 26. Februar 2015 (2015-02-26) * Absatz [0074] - Absatz [0077] * * Absatz [0054] - Absatz [0066] * * Absatz [0051] * * Absatz [0046] - Absatz [0047] * * Abbildungen * ----- | 1-7 | |
| A | EP 1 155 879 A2 (WABCO GMBH & CO OHG [DE]) 21. November 2001 (2001-11-21) * Absatz [0004] * * Absatz [0011] - Absatz [0022] * * Absatz [0025] - Absatz [0026]; Abbildungen * ----- | 1,7 | |
| A | JP 2008 241462 A (EQUOS RES CO LTD) 9. Oktober 2008 (2008-10-09) * Zusammenfassung; Abbildungen * ----- | 1,7 | RECHERCHIERTE SACHGEBIETE (IPC) G01M B66F B60C G01B |
| A | US 6 834 222 B2 (FORD GLOBAL TECH LLC [US]) 21. Dezember 2004 (2004-12-21) * Spalte 2, Zeile 40 - Spalte 3, Zeile 30 * * Spalte 6, Zeilen 29-62 * * Abbildungen * ----- | 1,7 | |

Der vorliegende Recherchenbericht wurde für alle Patentansprüche erstellt

| Recherchenort | Abschlußdatum der Recherche | Prüfer |
|---|---|---|
| Den Haag | 2. April 2019 | Özsoy, Sevda |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

...............................................................................

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 18 20 2770

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

02-04-2019

| Im Recherchenbericht angeführtes Patentdokument | Datum der Veröffentlichung | Mitglied(er) der Patentfamilie | Datum der Veröffentlichung |
|---|---|---|---|
| DE 102011053961 A1 | 28-03-2013 | KEINE | |
| DE 102013014198 A1 | 26-02-2015 | KEINE | |
| EP 1155879 A2 | 21-11-2001 | DE 10024178 A1<br>EP 1155879 A2<br>US 2001054310 A1 | 06-12-2001<br>21-11-2001<br>27-12-2001 |
| JP 2008241462 A | 09-10-2008 | KEINE | |
| US 6834222 B2 | 21-12-2004 | KEINE | |

EPO FORM P0461

Für nähere Einzelheiten zu diesem Anhang : siehe Amtsblatt des Europäischen Patentamts, Nr.12/82